# EUROPÄISCHE PATENTSCHRIFT

(11) **EP 2 909 059 B1**
(45) Veröffentlichungstag und Bekanntmachung des Hinweises auf die Patenterteilung: **25.05.2016**
(21) Anmeldenummer: 13779579.5
(22) Anmeldetag: 18.10.2013
(51) Int. Cl.: B60L 11/18, H01R 13/193, H01R 13/631, H01R 13/453, H01M 10/44, H02J 7/02

(54) **LADEVORRICHTUNG ZUM LADEN EINES ELEKTROFAHRZEUGS AN EINER LADESTATION**
CHARGING DEVICE FOR CHARGING A ELECTRIC VEHICLE AT A CHARGING STATION
DISPOSITIF DE CHARGE D'UN VÉHICULE ÉLECTRIQUE À UNE BORNE DE RECHARGE

(30) Priorität: 22.10.2012 DE 102012020592
(43) Veröffentlichungstag der Anmeldung: 26.08.2015
(73) Patentinhaber: Kostal Kontakt Systeme GmbH, 58513 Lüdenscheid (DE)
(72) Erfinder: HAUPTENBUCHNER, Siegfried, 58553 Halver (DE); SCHERER, Thomas, 58515 Lüdenscheid (DE); SCHRÖDER, Georg, 57489 Drolshagen (DE); SCHUBERT, Matthias, 58509 Lüdenscheid (DE); WELSCHHOLZ, Jörg, 58849 Herscheid (DE); DREES, Roland, 59199 Bönen (DE)
(74) Vertreter: Kerkmann, Detlef
(86) Internationale Anmeldenummer: PCT/EP2013/071901
(87) Internationale Veröffentlichungsnummer: WO 2014/064019

(56) Entgegenhaltungen:
- DE-A1-102010 044 091
- DE-U1-202012 003 577

## Beschreibung

Die Erfindung betrifft eine Ladevorrichtung zum Laden eines Elektrofahrzeugs an einer Ladestation, mit einem ersten ladestationsseitigen Lademodul und einem zweiten fahrzeugseitigen Lademodul, welche miteinander verbindbare elektrische Kontaktelemente aufweisen, wobei die Ladevorrichtung ladestationsseitig eine automatische Vorschubeinrichtung aufweist, durch deren Betätigung die elektrischen Kontaktelemente des ladestationsseitigen Lademodul mit den elektrischen Kontaktelementen des fahrzeugseitigen Lademoduls verbindbar sind, und wobei die Ladevorrichtung ladestationsseitig eine automatische Positioniervorrichtung zum Anfügen des ersten Lademoduls an das zweite Lademodul aufweist.

Eine solche Ladevorrichtung ist aus der deutschen Gebrauchsmusterschrift DE 20 2012 003577 U1 bekannt.

Zum Wiederaufladen der Traktionsbatterien eines Elektrofahrzeugs an einer Ladestation sind kontaktgebundene Anordnungen bekannt, die den Ladestrom mittels elektrischer Leitungen und einer Steckverbinderanordnung in das Fahrzeug leiten, sowie auch kontaktlose Anordnungen, welche einen Ladestrom auf induktiven Wege von einer ladestationsseitigen Transformatorspule auf eine fahrzeugseitige Transformatorspule übertragen.

Induktive Ladevorrichtungen ermöglichen im Allgemeinen ein komfortables Laden, da keine elektrischen Kontakte miteinander verbunden werden müssen und die aneinanderzufügenden Transformatorspulen durch automatische Vorrichtungen zueinander positioniert werden können.

Kontaktgebundene Ladevorrichtungen sind dagegen besonders wirtschaftlich im Betrieb, da sie im Vergleich zu induktive Ladevorrichtungen einen besseren Wirkungsgrad und damit weniger Verluste aufweisen. Außerdem können kontaktgebundene Ladevorrichtungen einen einfachen Aufbau aufweisen und dadurch besonders kostengünstig sein. Nachteilig ist, dass elektrische Kontaktelemente miteinander zu verbinden sind, was zumeist durch das Zusammenfügen von Steckverbinderteilen manuell ausgeführt werden muss.

Eine Ladevorrichtung, welche eine automatische Vorschubeinrichtung zur Verbindung von Kontaktelementen aufweist, ist aus der deutschen Offenlegungsschrift DE 10 2009 010 120 A1 bekannt. Bei dieser Ladevorrichtung muss das Elektrofahrzeug exakt zur Ladestation positioniert sein, damit die Kontaktelemente zusammengeführt werden können. Das Dokument schlägt dazu vor, das Fahrzeug auf Laufbändern - ähnlich wie in einer Waschanlage - in Längs- und Querrichtung verfahrbar anzuordnen und selbsttätig, beispielsweise mittels optischer Hilfsmittel, in eine Position zu bringen, in dem es mit seinen elektrischen Kontakten den elektrischen Gegenkontakten der Ladestation gegenüberliegt.

Die DE 10 2009 010 120 A1 beschreibt, Endabschnitte der stabförmigen elektrischen Kontakte der Ladestation querschnittlich dachförmig auszubilden und auf schräge Einführungsflächen der Kontakte des aufzuladenden Batteriesystems auftreffen zu lassen. Des Weiteren ist vorgeschlagen, dass die Kontakte der Ladestation nicht vollständig starr, sondern soweit elastisch biegsam sein sollen, dass sie auch bei kleinen seitlichen Abweichungen der Verbindungsrichtung auf die Gegenkontakte auftreffen können.

Ganz allgemein ist die praktische Realisierung einer Ladevorrichtung mit motorisch verbindbaren Kontakten nicht unproblematisch. Das Verbinden von elektrischen Kontaktelementen durch Maschinen erfordert eine sehr genaue Erkennung der Positionen der zu verbindenden Kontaktelemente, eine genaue mechanische Ausrichtung der Kontaktelemente zueinander und ein "feinfühliges" Agieren beim Verbinden und Trennen von Steckkontakten, und Beschädigungen oder Verschleiß an den elektrischen Kontaktelementen zu verhindern. Sicherzustellen ist insbesondere, dass die Kontaktelemente beim Verbinden exakt fluchtend zueinander ausgerichtet sind, damit sie sich nicht miteinander verkanten. Eine Ladevorrichtung, die diese Anforderungen erfüllt, erfordert zumeist einen hohen technischen und finanziellen Aufwand.

Es stellte sich daher die Aufgabe, eine Ladevorrichtung zum Laden eines Elektrofahrzeugs zu schaffen, welches sich durch einen relativ einfachen und kostengünstigen Aufbau auszeichnet und ein sicheres und besonders verschleißarmes Verbinden von elektrischen Kontaktelementen ermöglicht.

Diese Aufgabe wird erfindungsgemäß dadurch gelöst, dass die Kontaktelemente des ersten und des zweiten Lademoduls ohne Überwindung einer Kontaktkraft aneinander anfügbar sind, dass ein erstes Kontaktelement einen Kontaktstift und eine gegen den Kontaktstift aktuatorisch verschiebbare Führungshülse aufweist, dass ein zweites Kontaktelement zwei mit einem Federelement gekoppelte Kontaktbleche aufweist, deren Abstand zueinander gegen die Kraft des Federelements veränderbar ist, und dass die Position der Führungshülse relativ zum zweiten Kontaktelement die Lage des die Kontaktkraft bestimmenden Federelements beeinflussen kann.

Während die DE 10 2009 010 120 A1 eine Ladevorrichtung lediglich mit motorisch beweglichen Kontaktelementen vorschlägt, ist bei der im vorliegenden Dokument beschriebenen Ladevorrichtung vorgesehen, zusätzlich die die Kontaktelemente enthaltenden Lademodule zueinander positionierbar zu machen. Zudem sind die Kontaktelemente der beiden Lademodule ohne zu überwindende Kontaktkräfte miteinander verbindbar. Erst nach dem Zusammenfügen der Kontaktelemente erzeugen mechanisch freigegebene Federelemente Kontaktkräfte zwischen den Kontaktelementen.

Hierdurch wird der automatische Fügevorgang von Kontaktelementen besonders einfach und sicher. Das kraftfreie Zusammenfügen vermindert Kontaktverschleiß und die Gefahr von Beschädigungen, etwa durch ein Verkanten von Kontaktelementen. Dennoch können am Ende des Verbindungsvorgangs hohe Kontaktkräfte realisiert werden, welche für eine gute elektrische Verbindung zwischen den Lademodulen sorgen.

Das exakte Positionieren der Lademodule relativ zueinander kann vorteilhaft durch Zentriermittel oder/und durch Positionierungselemente an wenigstens einem der Lademodule unterstützt werden.

Besonders vorteilhaft ist es, wenn die Lademodule nach dem Zusammenfügen mechanisch miteinander verriegelbar sind, um eine exakte Positionierung der Lademodule auch während des Verbindens der elektrischen Kontaktelemente zu gewährleisten.

Nachfolgend soll die Erfindung anhand der Zeichnung dargestellt und näher erläutert werden. Die Figuren 1 bis 4 zeigen jeweils ein erstes und ein zweites Lademodul und zwar in der
- Figur 1: als unverbundene Einzelteile,
- Figur 2: dito, wobei das zweite Lademodul geöffnet dargestellt ist,
- Figur 3: im teilweise zusammengefügten Zustand,
- Figur 4: im vollständig zusammengefügten Zustand.

Die Figuren 5 bis 8 zeigen jeweils eine Phase beim Zusammenfügen von ersten und zweiten Kontaktelementen.

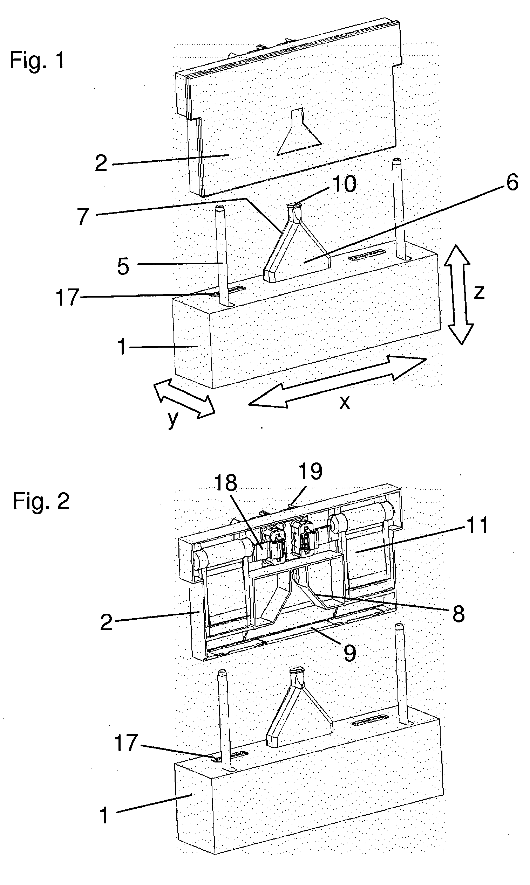

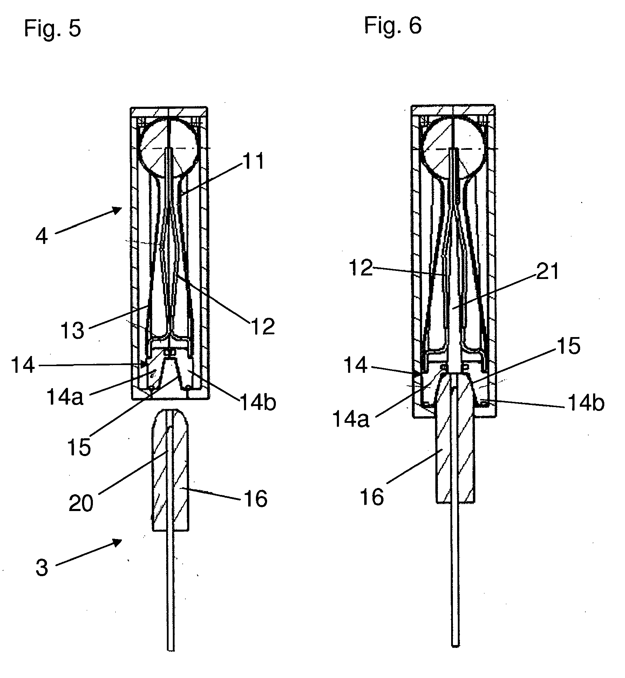

Die Figur 1 zeigt ein erstes und ein zweites Lademodul 1, 2 zum Laden eines Elektrofahrzeugs an einer Ladestation, wobei die Lademodule 1, 2 als noch unverbundene Einzelteile dargestellt sind. Das erste Lademodul 1 ist Bestandteil der hier nicht dargestellten Ladestation und durch eine automatische Positioniervorrichtung in drei zueinander senkrechten Richtungen, hier angedeutet durch die Richtungspfeile mit den Bezeichnungen x, y, z, bewegbar. Die hier ebenfalls nicht bildlich dargestellte Positioniervorrichtung erkennt, beispielsweise durch eine Kamerasensorik, die Position des am Elektrofahrzeug angeordneten zweiten Lademoduls 2 und richtet das erste Lademodul 1 durch eine mehrachsige Aktuatorik, die beispielsweise als Roboterarm ausgeführt sein kann, relativ zum zweiten Lademodul 2 aus, so dass danach ein Zusammenfügen der Lademodule 1, 2 und der daran angeordneten Kontaktelemente 3, 4 (die in den Figuren 5 bis 8 deutlich dargestellt sind) möglich wird.

Das Lademodul 2, welches die Form einer Kassette aufweist, ist an der Karosserie eines Elektrofahrzeugs angeordnet. Bevorzugte Anbringungsorte sind der Bereich hinter der vorderen Stoßstange, vorzugsweise hinter dem Kennzeichenschild, sowie an der Unterseite des Elektrofahrzeugs. Es ist selbstverständlich nicht zwingend, dass die beiden Lademodule 1, 2 in senkrechter Richtung aneinandergefügt werden; die Lademodule 1, 2 können alternativ auch so zueinander ausgerichtet sein, dass das Zusammenfügen in einer horizontalen oder in einer anderen beliebigen Richtung erfolgen kann.

Das Zusammenfügen der Lademodule 1, 2 wird durch zwei stiftförmige Positionierungselemente 5 unterstützt, welche jeweils mit einem Kraftsensor oder Schalter im Gehäuse des ersten Lademoduls 1 verbunden sein können. Sind die beiden Lademodule 1, 2 parallel zueinander ausgerichtet, so berührt das Gehäuse des zweiten Lademoduls 2 die beiden Positionierungselemente 5 ungefähr zeitgleich. Da der Abstand der beiden Positionierungselemente 5 nur geringfügig kleiner ist als die Breite des Gehäuses des zweiten Lademoduls 2, ist durch das gleichzeitige Ansprechen der Positionierungselemente 5 auch sichergestellt, dass das zweite Lademodul 2 in der X-Richtung annähernd zentriert zum ersten Lademodul 1 ausgerichtet ist und daher die Positioniervorrichtung das Zusammenfügen der beiden Lademodule 1, 2 einleiten kann.

Während des Anfügevorgangs wird eine noch genauere Ausrichtung der beiden Lademodule 1, 2 durch ein vom ersten Lademodul 1 hervorstehendes Zentrierelement 6 bewirkt, der hier als ein Körper mit zwei schräg stehenden Anlageflächen 7 ausgebildet ist. Alternativ kann als Zentrierelement auch ein beispielsweise kegelförmiger Körper vorgesehen werden.

Wie die Figuren 2 bis 4 verdeutlichen, sind innerhalb des Gehäuses des zweiten Lademoduls 2 zwei Führungsstege 8 angeformt, die während des Zusammenfügens der Lademodule 1, 2 an den Anlageflächen 7 des Zentrierelements 6 zu Anlage kommen.

Die beiden Lademodule 1, 2 werden somit während ihres Zusammenfügens durch die das erste Lademodul 1 bewegende Positioniervorrichtung erstens durch die Positionierungselemente 5 in Y-Richtung und zweitens durch das Zentrierelement 6 und die Führungsstege 8 in X-Richtung exakt zueinander ausgerichtet. Die Annäherung der beiden Lademodule 1, 2 in Z-Richtung sowie eine zuvor erfolgende Annäherung der Lademodule 1, 2 relativ zueinander erfolgt ebenfalls durch die Positioniervorrichtung und kann insbesondere durch eine optische Sensorik unterstützt werden.

Das Gehäuse des zweiten Lademoduls 2 weist eine Schutzklappe 9 auf, welche beim Anfügen an das erste Lademodul 1, vorzugsweise durch das Zentrierelement 6, automatisch geöffnet wird.

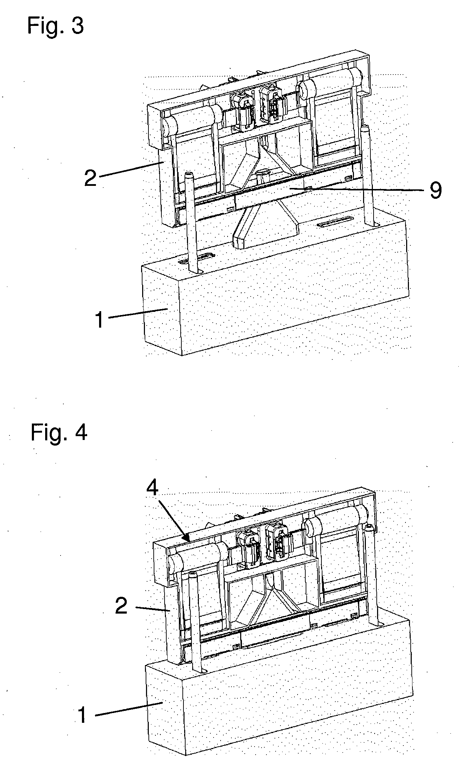

Am Ende des Fügevorgangs nehmen die beiden Lademodule 1, 2 die in der Figur 4 dargestellte Position zueinander an. Im letzten Schritt verriegeln die Gehäuse der beiden Lademodule 1, 2 mechanisch miteinander. Dies kann insbesondere dadurch geschehen, dass ein Aktuator am ersten Lademodul 1 einen am Zentrierelement 6 angeordneten Riegel 10 mit einer hier nicht erkennbaren Riegelöffnung am zweiten Lademodul 2 formschlüssig verbindet. Die beiden Lademodule 1, 2 sind damit exakt zueinander ausgerichtet und mechanisch fest miteinander verbunden.

Die miteinander verriegelten Lademodule 1, 2 ermöglichen es nun, erste Kontaktelemente 3 am ersten Lademodul 1 mit zweiten Kontaktelementen 4 am zweiten Lademodul 2 miteinander zu verbinden, ohne dass sich dabei die Lademodule 1, 2 gegeneinander verschieben können. Umgekehrt ist es auch vorteilhaft, dass bis zur Verriegelung die Kontaktaktelemente 3, 4 der Lademodule 1, 2 noch nicht miteinander interagieren, da so das Positionieren, Ausrichten und Verriegeln der Lademodule 1, 2 besonders vorteilhaft ohne mechanische Beeinflussung durch die Kontaktelemente 3, 4 erfolgen kann.

Das erste Lademodul 1 weist zwei Kontaktöffnungen 17 (erkennbar in den Figuren 1 bis 3) auf, aus denen erste Kontaktelemente 3 durch einen motorischen Antrieb ausfahrbar sind. Von den zweiten Kontaktelementen 4 ist in den Figuren 2 bis 4 jeweils eine Außenfläche eines Federelements 11 zur Erzeugung einer Kontaktkraft, sowie jeweils ein Metallstreifen 18 erkennbar. Die Metallstreifen 18 bilden auf einer Außenfläche des zweiten Lademoduls 2 elektrische Anschlusskontakte 19 aus, die mit der elektrischen Anlage des Elektrofahrzeugs verbindbar sind.

Die ersten und zweiten Kontaktelemente 3, 4 sind in den Figuren 5 bis 8 in verschiedenen Fügephasen dargestellt. Diese Fügephasen korrespondieren *nicht* mit den in den Figuren 1 bis 4 dargestellten Phasen des Zusammenfügens der Lademodule 1, 2. Das Verbinden der Kontaktelemente 3, 4 beginnt erst bei vollständig miteinander verbundenen Lademodulen 1, 2 wie sie die Figur 4 zeigt.

Die Figuren 5 bis 8 zeigen jeweils eine Schnittansicht durch das zweite Lademodul 2 entlang eines zweiten Kontaktelements 4 sowie durch ein erstes Kontaktelement 3, welches vom ersten Lademodul 1 aus an das zweite Kontaktelement 4 anfügbar ist. Einzelheiten des ersten Lademoduls 1 sind in den Figuren 5 bis 8 nicht dargestellt. Verzichtet wurde insbesondere auch auf die Darstellung einer Aktuatorik, welche das erste Kontaktelement 3 in Richtung auf das zweite Kontaktelement 4 verschiebt. Diese Aktuatorik kann insbesondere elektromotorische, elektromagnetische, hydraulische oder pneumatische Komponenten aufweisen, die durch eine elektronische Steuerungsanlage vorzugsweise vollautomatisch betätigt werden.

Das zweite Kontaktelement 4, welches im Gehäuse des zweiten Lademoduls 2 angeordnet ist, weist ein, hier als Omegafeder ausgeführtes Federelement 11 auf, das zwei nebeneinander angeordnete Kontaktbleche 12 umschließt. Endabschnitte der Schenkel 13 des Federelements 11 und der Kontaktbleche 12 sind mit einem zweiteiligen Kontaktträger 14 verbunden. Auf der dem Federelement 11 und den Kontaktblechen 12 abgewandten Seite bilden die beiden Teile 14a, 14b des Kontaktträgers 14 Anlaufschrägen 15 aus, die in Richtung zur Außenseite des zweiten Kontaktelements 4 auseinanderlaufen.

Das erste Kontaktelement 3 weist einen Flachstecker 20 und eine den Flachstecker 20 umgebende Führungshülse 16 auf, die gegen den Flachstecker 20 verschiebbar ist. Sowohl der Flachstecker 20 als auch die Führungshülse 16 sind durch eine nicht dargestellte Aktuatorik in Richtung auf das zweite Kontaktelement 4 positionierbar, wodurch das erste und zweite Kontaktelement 3, 4 miteinander verbindbar bzw. voneinander trennbar sind. Das Verbinden des ersten und des zweiten Kontaktelements 3, 4 erfolgt in den in den Figuren 5 bis 8 dargestellten Phasen.

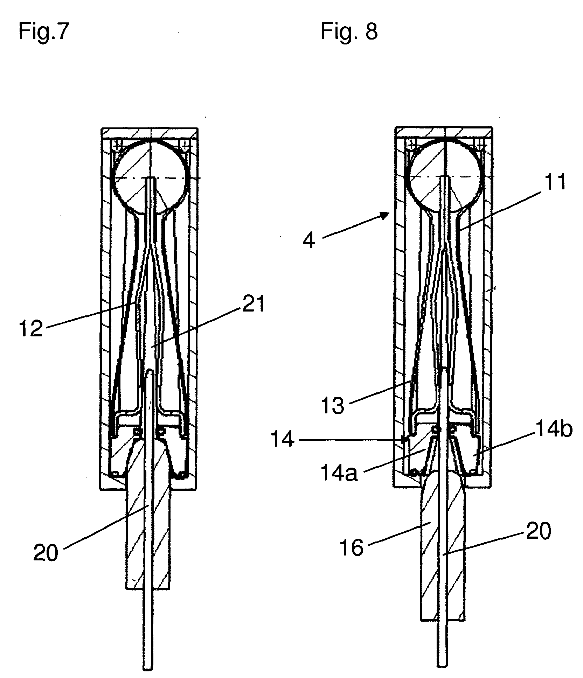

In der Figur 5 sind das erste und das zweite Kontaktelement 3, 4 noch nicht miteinander verbunden. Zum Beginn des Fügevorgangs werden der Flachstecker 20 und die Führungshülse 16 gemeinsam in Richtung auf das zweite Kontaktelement 4 bewegt. Der freie Endabschnitte des Flachsteckers 20 ist dabei von der Führungshülse 16 umgeben.
In der folgenden Phase, welche die Figur 6 zeigt, trifft die Führungshülse 16 auf die Anlaufschrägen 15 des Kontaktträgers 14 und drückt dadurch die beiden Teile 14a, 14b des Kontaktträgers 14 und damit auch die mit dem Kontaktträger 14 verbundenen Schenkel 13 des Federelements 11 sowie die beiden Kontaktbleche 12 auseinander. Zwischen den Kontaktblechen 12 entsteht so ein Zwischenraum 21, der weit genug ist, um den Flachstecker 20 reibungsfrei einzuschieben, was in der Figur 7 dargestellt ist, Während des Einschiebens lastet keine Kontaktkraft auf dem Flachstecker 20, so dass kein mechanischer Verschleiß durch Reibung zwischen den Kontaktelementen 3, 4 entsteht. Erst wenn der Flachstecker 20 seine vorgesehene Endposition erreicht hat, wird eine Kontaktkraft auf den Flachstecker 20 erzeugt. Wie die Figur 8 zeigt, geschieht dies dadurch, dass die die Führungshülse 16 gegen den Flachstecker 20 verschoben und von dem zweiten Kontaktelement 4 weggeführt wird, wodurch die Teile 14a, 14b des Kontaktträgers 14 durch das Federelement 11 wieder zusammengeführt werden und die Schenkel 13 des Federelements 11 die Kontaktbleche 12 an die Außenflächen des Flachsteckers 20 andrücken.

Auch das Trennen der elektrischen Komponenten der beiden Kontaktelemente 3, 4 kann reibungsfrei erfolgen, in dem der in den Figuren 5 bis 8 skizzierte Ablauf umgekehrt wird.

### Bezugszeichenliste

- 1: erstes Lademodul (an der Ladestation)
- 2: zweites Lademodul (am Fahrzeug)
- 3: Kontaktelemente (am Lademodul)
- 4: Kontaktelemente (am Fahrzeug)
- 5: Positionierungselemente
- 6: Zentrierelement
- 7: Anlageflächen
- 8: Führungsstege
- 6, 8: Zentriermittel
- 9: Schutzklappe
- 10: Riegel
- 11: Federelement
- 12: Kontaktbleche
- 13: Schenkel (des Federelements)
- 14: Kontaktträger
- 14a, 14b: Teile (des Kontaktträgers)
- 15: Anlaufschrägen
- 16: Führungshülse
- 17: Kontaktöffnungen
- 18: Metallstreifen
- 19: Anschlusskontakte
- 20: Flachstecker (Kontaktstift)
- 21: Zwischenraum

- x, y, z: Richtungen (räumliche Achsen)

## Patentansprüche

1. Ladevorrichtung zum Laden eines Elektrofahrzeugs an einer Ladestation,
mit einem ersten ladestationsseitigen Lademodul (1) und einem zweiten fahrzeugseitigen Lademodul (2), welche miteinander verbindbare elektrische Kontaktelemente (3, 4) aufweisen,
wobei die Ladevorrichtung ladestationsseitig eine automatische Vorschubeinrichtung aufweist, durch deren Betätigung die elektrischen Kontaktelemente (3) des ladestationsseitigen Lademodul (1) mit den elektrischen Kontaktelementen (4) des fahrzeugseitigen Lademoduls (2) verbindbar sind, und
wobei die Ladevorrichtung ladestationsseitig eine automatische Positioniervorrichtung zum Anfügen des ersten Lademoduls (1) an das zweite Lademodul (2) aufweist,
**dadurch gekennzeichnet,**
**dass** die Kontaktelemente (3, 4) des ersten und des zweiten Lademoduls (1, 2) ohne Überwindung einer Kontaktkraft aneinander anfügbar sind,
**dass** ein erstes Kontaktelement (3) einen Kontaktstift (20) und eine gegen den Kontaktstift (20) aktuatorisch verschiebbare Führungshülse (16) aufweist,
**dass** ein zweites Kontaktelement (4) zwei mit einem Federelement (11) gekoppelte Kontaktbleche (12) aufweist, deren Abstand zueinander gegen die Kraft des Federelements (11) veränderbar ist, und
**dass** die Position der Führungshülse (16) relativ zum zweiten Kontaktelement (4) die Lage des die Kontaktkraft bestimmenden Federelements (11) beeinflussen kann.

2. Ladevorrichtung nach Anspruch 1, **dadurch gekennzeichnet, dass** die automatische Positioniervorrichtung das erste Lademodul (1) entlang von drei zu einander senkrechten räumlichen Achsen (x, y, z) positionieren kann.

3. Ladevorrichtung nach Anspruch 2, **dadurch gekennzeichnet, dass** die automatische Positioniervorrichtung eine elektronische Steuerungsvorrichtung und einen mehrachsigen Aktuator aufweist.

4. Ladevorrichtung nach Anspruch 1, **dadurch gekennzeichnet, dass** die Lademodule (1, 2) nach dem Zusammenfügen durch einen aktuatorisch betätigbaren Riegel (10) formschlüssig miteinander verbindbar sind.

5. Ladevorrichtung nach Anspruch 1, **dadurch gekennzeichnet, dass** die Lademodule (1, 2) zusammenwirkende Zentriermittel (6, 8) aufweisen.

6. Ladevorrichtung nach Anspruch 1, **dadurch gekennzeichnet, dass** das erste Lademodul (1) zwei stiftförmige Positionierungselemente (5) aufweist, die jeweils mit einem Schalter oder einem Kraftsensor gekoppelt sind.

7. Ladevorrichtung nach Anspruch 1, **dadurch gekennzeichnet, dass** der Kontaktstift (20) als Flachstecker ausgebildet ist.

8. Ladevorrichtung nach Anspruch 1, **dadurch gekennzeichnet, dass** das zweite Lademodul (2) eine das Gehäuse des zweiten Lademoduls (2) verschließende Schutzklappe (9) aufweist, die beim Verbinden mit dem ersten Lademodul (1) durch das erste Lademodul (1) geöffnet wird.

## Claims

1. Charging apparatus for charging an electric vehicle at a charging station
having a first charging module (1) on the charging station side and a second charging module (2) on the vehicle side which have electrical contact elements (3, 4) that can be connected to each other,
for which purpose the charging apparatus has an automatic feeding facility on the charging station side, the actuation of which results in the electrical contact elements (3) of the charging module (1) on the charging station side being connectable to the electrical contact elements (4) of the charging module (2) on the vehicle side, and
whereby the charging apparatus on the charging station side has an automatic positioning device for attaching the first charging module (1) to the second charging module (2),
**characterised in that**
the contact elements (3, 4) of the first and the second charging modules (1, 2) can be attached to each other without overcoming any contact force,
that a first contact element (3) has a contact pin (20) and a guide sleeve (16) that can move against the contact pin (20) in an actuating manner,
that a second contact element (4) has two contact plates (12) coupled to a spring element (11) whose distance to each other is variable against the force of the spring element (11), and
that the position of the guide sleeve (16) in relation to the second contact element (4) can influence the position of the spring element (11) determining the contact force.

2. Charging apparatus according to Claim 1, **characterised in that** the automatic positioning device can position the first charging module (1) along three spatial axes (x, y, z) that are perpendicular to each other.

3. Charging apparatus according to Claim 2, **characterised in that** the automatic positioning device has electronic control equipment and a multi-axis actuator.

4. Charging apparatus according to Claim 1, **characterised in that** the charging modules (1, 2) can be connected to each other in a form-fit manner by means of a latch (10) which can be operated in an actuating manner after their attachment.

5. Charging apparatus according to Claim 1, **characterised in that** the charging modules (1, 2) have cooperating centring means (6, 8).

6. Charging apparatus according to Claim 1, **characterised in that** the first charging module (1) has two pin-like positioning elements (5), each of which is coupled to a switch or to a force sensor.

7. Charging apparatus according to Claim 1, **characterised in that** the contact pin (20) is designed as a flat connector.

8. Charging apparatus according to Claim 1, **characterised in that** the second charging module (2) has a protective cover (9) which closes the housing of the second charging module (2) and is opened by the first charging module (1) upon connection to the first charging module (1).

## Revendications

1. Dispositif de charge pour charger un véhicule électrique à une station de charge,
avec un premier module de charge (1), côté station de charge, et un deuxième module de charge (2), côté véhicule, lesquels présentent des éléments de contact électriques (3, 4) qui peuvent être reliés ensemble,
sachant que le dispositif de charge présente, côté station de charge, un dispositif d'avancement automatique, par l'actionnement duquel les éléments de contact électriques (3) du module de charge, côté station de charge (1) peuvent être reliés aux éléments de contact électriques (4) du module de charge, côté véhicule (2), et
sachant que la station de charge présente un dispositif de positionnement automatique, côté station de charge, pour adjoindre le premier module de charge (1) au deuxième module de charge (2),
**caractérisé en ce que**
les éléments de contact (3, 4) du premier module de charge et du deuxième module de charge (1, 2) peuvent être assemblés sans devoir surmonter une force de contact,
un premier élément de contact (3) présente une fiche de contact mâle (20) et une douille de guidage (16) pouvant être poussée en actionnement contre la fiche de contact mâle (20),
un deuxième élément de contact (4) présente deux tôles de contact (12), couplées par un élément élastique (11), qui sont distancées l'une de l'autre d'un intervalle pouvant être modifié en surmontant la force de l'élément élastique (11), et
la position de la douille de guidage (16), par rapport au deuxième élément de contact (4), peut influencer la position de l'élément élastique (11) qui détermine la force de contact.

2. Dispositif de charge selon la revendication 1, **caractérisé en ce que** le dispositif de positionnement automatique peut positionner la premier module de charge (1) le long de trois axes (x, y, z) spatialement perpendiculaires l'un par rapport à l'autre.

3. Dispositif de charge selon la revendication 2, **caractérisé en ce que** le dispositif de positionnement automatique présente un dispositif de commande électronique et un actionneur à plusieurs axes.

4. Dispositif de charge selon la revendication 1, **caractérisé en ce que** les modules de charge (1, 2), après l'assemblage, peuvent être reliés ensemble par engagement géométrique, .au moyen d'un pêne (10) pouvant être actionné.

5. Dispositif de charge selon la revendication 1, **caractérisé en ce que** les modules de charge (1, 2) présentent des moyens de centrage (6, 8) qui coopèrent ensemble.

6. Dispositif de charge selon la revendication 1, **caractérisé en ce que** le premier module de charge (1) présente deux éléments de positionnement (5) en forme de tiges, qui sont couplés chacun avec un commutateur ou un capteur de force.

7. Dispositif de charge selon la revendication 1, **caractérisé en ce que** la tige de contact (20) est réalisée en forme de fiche plate.

8. Dispositif de charge selon la revendication 1, **caractérisé en ce que** le deuxième module de charge (2) présente un volet de protection (9) qui, fermant le boîtier dudit deuxième module de charge (2), est ouvert par le premier module de charge (1) lors du raccordement au premier module de charge (1).
